# EUROPEAN PATENT APPLICATION

(11) **EP 1 505 602 A1**
(43) Date of publication of application: **09.02.2005**
(21) Application number: 03749993.6
(22) Date of filing: 08.05.2003
(51) Int. Cl.: G11B 27/00, G11B 20/12, G06F 12/00, G11B 20/10

(54) **RECORDING/REPRODUCTION SYSTEM, RECORDING/REPRODUCTION METHOD, PROGRAM, AND RECORDING MEDIUM**

(30) Priority: 10.05.2002 JP 2002135124
(71) Applicant: MATSUSHITA ELECTRIC INDUSTRIAL CO., LTD., Kadoma-shi, Osaka 571-8501 (JP); MATSUMI, Chiyoko, Suita-shi, Osaka 565-0862 (JP)
(72) Inventor: MATSUMI, Chiyoko, Suita-shi, Osaka 565-0862 (JP); TAKEGUCHI, Nobuyasu, Kawachinagano-shi, Osaka 586-0022 (JP); MIYAMOTO, Harutoshi, Ibaraki-shi, Osaka 567-0893 (JP); YANAGAWA, Yoshifumi, F-509, 2-1, Nishinorikyu-cho, Kyoto-shi, Kyoto 607-8345 (JP); ITANI, Tetsuya, Ikoma-shi, Nara 630-0141 (JP); YAMADA, Jiro, Souraku-gun, Kyoto 619-0237 (JP); TORII, Yasuyuki, Kyoto 614-8032 (JP)
(74) Representative: Grünecker, Kinkeldey, Stockmair & Schwanhäusser Anwaltssozietät
(86) International application number: PCT/JP2003/005732
(87) International publication number: WO 2003/096347

(57) **Abstract**

It has been difficult to replay data in a manner which better suits a user's intention.

A recording/replaying system comprises a recording medium 15 on which a plurality of data pieces are recorded, write file managing means 11 which records on the recording medium 15 one or multiple lists which are for selecting predetermined data pieces from among the plurality of recorded data pieces and specifying thus selected predetermined data pieces, file recording means 14, control means 21 which replays the predetermined data pieces specified by the lists based on thus recorded one or multiple lists, the file replaying means 23, and the data file outputting means 24.

## Description

### BACKGROUND OF THE INVENTION

The present invention relates to a recording/replaying system, a recording apparatus, a replaying apparatus, a recording medium, a recording/replaying method, a recording method, a replaying method, and a program, which are used to record digital data for instance as a file.

### Description of the Related Art

CDs and DVDs on which contents, such as music and video to be enjoyed using a portable replaying machine, are recorded were originally meant as goods for sale or rental.

With proliferation of personal computers over the recent years, PC users have started to hold, on HDDs of their personal computers, music data they rip off from music CDs or music data and video data they download on the Internet in a file format. Further, using their personal computers, PC users have started to record such music data, video data and the like in a file format on CD-Rs, CD-RWs, etc.

Portable replaying machines which are capable of replaying these files and portable replaying machines which permit use of other mediums have become available.

When one tries recording in a file format, he or she often compresses the data, noting an advantage that many contents would be held on one medium although the compression could deteriorate the quality of the audio or video.

When one tries to store music data in a file format, using the ID3 tag of MP3, one can also store information such as a composer (text, a photo, etc.) , a player (text, a photo, etc.), lyrics and other comment in the same file.

In the case of video data, using EXIF of JPEG, it is possible to hold in the same file such information as a camera setting condition during photographing, the name of the camera used and other comment.

According to AVI, a portion called a header holds such information as a replaying time, the screen size of video, a frame rate, a sampling frequency for audio and a channel count.

These information is useful not only for replaying of a file but also for confirmation or search regarding what kind of file this file is.

Functions as those described above are nowadays implemented not only in portable replaying machines but also floor-type replaying machines, although the implementation started only with portable replaying machines.

In a CD-ROM, such files are managed in accordance with a file system which is defined in ISO9660, so the CD-ROM that directories as exactly designated on a personal computer are developed and each file is recorded as it belongs to some directory.

When one tries to replay thus created CD-ROM on a conventional portable replaying machine, first, what is recorded on the CD-ROM is checked.

To this end, based on the file system, the directory structure from the root directory and files belonging to each directory are displayed.

As a user selects a file he or she wishes to replay, the recording position of the selected file is checked and replaying of the file is started.

However, the conventional portable replaying machine described above has the following drawbacks:
1) Particularly in the event that a recording medium is not a memory such as a compact flash but is a disk medium such as a CD and a DVD, a data read/write speed of the conventional portable replaying machine is considerably slower than a read/write speed at which a personal computer reads from or writes in an HDD;
2) The capability of the replaying machine to display the contents on a medium such as directory names and file names is inferior to that of a personal computer;
3) A portable replaying machine generally has a small display and is incapable of displaying in colors. Many such machines comprise displays only on remote controllers or main units, which sometimes necessitates to operate without referring to displays; and
4) Inputting means of the replaying machine is poorer than that of a personal computer.

There are further disadvantages as described below, as the conventional replaying machine is supposed to replay a medium on which recording has been made based on a file system which was written on the premise that the file system would be used in a personal computer:
1) It takes a long time until a recorded content gets displayed since loading of a medium to the replay machine;
2) In order to display information (e.g., property) related to each file which is used on a personal computer, it is necessary to read information within each file, which requires an additional time;
3) It is not easy to recognize a recorded content which is displayed;
4) It is difficult to search for data to be replayed;
5) Since files are recorded on a medium in an order (such as the alphabetic order) selected by a personal computer with reference to a personal computer's criterion during recording, the order for replaying becomes messy; and
6) The operability of the machine is not good.

### SUMMARY OF THE INVENTION

In light of these problems with the conventional techniques, the present invention aims at providing a recording/replaying system, a recording apparatus, a replaying apparatus, a recording medium, a recording/replaying method, a recording method, a replaying method and a program which permit to replay data in better conformity with a user's intention.

The first invention is a recording/replaying system, comprising:
a recording medium on which a plurality of data pieces are recorded;
data selecting means of selecting a predetermined data piece from among said plurality of recorded data pieces;
list recording means of recording on said recording medium one or multiple lists for specifying said predetermined selected data piece; and
data replaying means of replaying a predetermined data piece specified by said list, based on said one or multiple recorded lists.

The second invention is the recording/replaying system of the first invention, further comprising data-related information data recording means of recording, on said recording medium, data-related information data regarding data-related information relevant to a predetermined data piece specified by said one or multiple lists.

The third invention is the recording/replaying system of the first invention, further comprising list data recording means of recording, on said recording medium, list data regarding said one or multiple lists.

The fourth invention is the recording/replaying system of the third invention, wherein said list data include all or some of (a) list recording position data regarding positions at which said one or multiple lists are recorded, (b) list count data regarding the number of said one or multiple lists, (c) count data by data type regarding the number of predetermined data pieces by type specified by said one or multiple lists, (d) data recording position data regarding positions at which predetermined data pieces specified by said one or multiple lists are recorded, and (e) data-related information data regarding data-related information related to predetermined data pieces specified by said one or multiple lists.

The fifth invention is the recording/replaying system of the third invention, further comprising data-related information data recording means of recording, on said recording medium, data-related information data regarding data-related information related to predetermined data pieces specified by said one or multiple lists,
wherein said list data include data-related information data recording position data regarding positions at which said data-related information data are recorded.

The sixth invention is a recording/replaying method, comprising:
a data selecting step of selecting a predetermined data piece from among a plurality of data pieces which are recorded on a recording medium;
a list recording step of recording, on said recording medium, one or multiple lists for specifying said predetermined selected data piece; and
a data replaying step of replaying a predetermined data piece specified by said list, based on said one or multiple recorded lists.

The seventh invention is a program which makes a computer execute the data selecting step of selecting a predetermined data piece from among a plurality of data pieces which are recorded on a recording medium; the list recording step of recording, on said recording medium, one or multiple lists for specifying said predetermined selected data piece; and the data replaying step of replaying a predetermined data piece specified by said list, based on said one or multiple recorded lists, the steps being included in the recording/replaying method of the sixth invention.

The eighth invention is a recording medium which holds the program of the seventh invention and which can be processed by a computer.

The ninth invention is a recording apparatus, comprising:
data selecting means of selecting a predetermined data piece from among a plurality of data pieces recorded on a recording medium; and
list recording means of recording on said recording medium one or multiple lists for specifying said predetermined selected data piece.

The tenth invention is the recording apparatus according to the ninth invention, wherein a predetermined data piece specified by said list is replayed based on said one or multiple recorded lists.

The eleventh invention is a recording method, comprising:
a data selecting step of selecting a predetermined data piece from among a plurality of data pieces recorded on a recording medium; and
a list recording step of recording on said recording medium one or multiple lists for specifying said predetermined selected data piece.

The twelfth invention is a program which makes a computer execute the data selecting step of selecting a predetermined data piece from among a plurality of data pieces recorded on a recording medium; and the list recording step of recording on said recording medium one or multiple lists for specifying said predetermined selected data piece, the steps being included in the recording method according to the eleventh invention.

The thirteenth invention is a recording medium which holds the program according to the twelfth invention and can be processed by a computer.

The fourteenth invention is a replaying apparatus comprising data replaying means of replaying, based on one or multiple lists recorded on a recording medium for specifying a predetermined data piece which is selected from among a plurality of data pieces recorded on said recording medium, a predetermined data piece specified by said list.

The fifteenth invention is a replaying method comprising a data replaying step of replaying, based on one or multiple lists recorded on a recording medium for specifying a predetermined data piece which is selected from among a plurality of data pieces recorded on said recording medium, a predetermined data piece specified by said list.

The sixteenth invention is a program which makes a computer execute the data replaying step of replaying, based on one or multiple lists recorded on a recording medium for specifying a predetermined data piece which is selected from among a plurality of data pieces recorded on said recording medium, a predetermined data piece specified by said list, the step being included in the replaying method according to the fifteenth invention.

The seventeenth invention is a recording medium which holds the program according to the sixteenth invention and can be processed by a computer.

The eighteenth invention is a recording medium on which a plurality of data pieces, and one or multiple lists for specifying a predetermined data piece selected from among said plurality of data pieces, are recorded.

The nineteenth invention is the recording medium according to the eighteenth invention from which a predetermined data piece specified by said list is replayed based on said one or multiple recorded lists.

The twentieth invention is a recording/replaying system, comprising:
a recording medium on which a plurality of data pieces are recorded;
replaying-order designating data recording means of recording, on said recording medium, replaying-order designating data for designating a replaying order in which a predetermined data piece is replayed among said plurality of recorded data pieces; and
data replaying means of replaying a predetermined data piece for which said replaying order is designated by said replaying-order designating data, based on said recorded replaying-order designating data.

The twenty-first invention is a recording/replaying method, comprising:
a replaying-order designating data recording step of recording, on a recording medium on which a plurality of data pieces are recorded, replaying-order designating data for designating a replaying order in which a predetermined data piece is replayed among said plurality of recorded data pieces; and
a data replaying step of replaying a predetermined data piece for which said replaying order is designated by said replaying-order designating data, based on said recorded replaying-order designating data.

The twenty-second invention is a program which makes a computer execute the replaying-order designating data recording step of recording, on a recording medium on which a plurality of data pieces are recorded, replaying-order designating data for designating a replaying order in which a predetermined data piece is replayed among said plurality of recorded data pieces; and the data replaying step of replaying a predetermined data piece for which said replaying order is designated by said replaying-order designating data, based on said recorded replaying-order designating data, the steps being included in the recording/replaying method according to the twenty-first invention.

The twenty-third invention is a recording medium which holds the program according to the twenty-second invention and can be processed by a computer.

The twenty-fourth invention is a recording apparatus comprising replaying-order designating data recording means of recording, on a recording medium on which a plurality of data pieces are recorded, replaying-order designating data for designating a replaying order in which a predetermined data piece is replayed among said plurality of recorded data pieces.

The twenty-fifth invention is the recording apparatus according to the twenty-fourth invention, wherein based on said recorded replaying-order designating data, a predetermined data piece is replayed for which said replaying order is designated by said replaying-order designating data.

The twenty-sixth invention is a recording method comprising a replaying-order designating data recording step of recording, on a recording medium on which a plurality of data pieces are recorded, replaying-order designating data for designating a replaying order in which a predetermined data piece is replayed among said plurality of recorded data pieces.

The twenty-seventh invention is a program which makes a computer execute the data replaying-order designating data recording step of recording, on a recording medium on which a plurality of data pieces are recorded, replaying-order designating data for designating a replaying order in which a predetermined data piece is replayed among said plurality of recorded data pieces, the step being included in the recording method according to the twenty-sixth invention.

The twenty-eighth invention is a recording medium which holds the program according to the twenty-seventh invention and can be processed by a computer.

The twenty-ninth invention is a replaying apparatus comprising data replaying means of replaying, based on replaying-order designating data recorded on a recording medium on which said plurality of data pieces are recorded, for designating a replaying order in which a predetermined data piece is replayed among a plurality of recorded data pieces, a predetermined data piece for which replaying order is designated by said replaying-order designating data.

The thirtieth invention is a replaying method comprising a data replaying step of replaying, based on replaying-order designating data recorded on said recording medium on which said plurality of data pieces are recorded, for designating a replaying order in which a predetermined data piece is replayed among a plurality of recorded data pieces, a predetermined data piece for which replaying order is designated by said replaying-order designating data.

The thirty-first invention is a program which makes a computer execute the data replaying step of replaying, based on replaying-order designating data recorded on said recording medium on which said plurality of data pieces are recorded, for designating a replaying order in which a predetermined data piece is replayed among a plurality of recorded data pieces, a predetermined data piece for which replaying order is designated by said replaying-order designating data, the step being included in the replaying method according to the thirtieth invention.

The thirty-second invention is a recording medium which holds the program according to the thirty-first invention and can be processed by a computer.

The thirty-third invention is a recording medium on which a plurality of data pieces, and replaying-order designating data for designating a replaying order in which a predetermined data piece is replayed among said plurality of data pieces, are recorded.

The thirty-fourth invention is the recording medium according to the thirty-third invention, wherein based on said recorded replaying-order designating data, a predetermined data piece is replayed for which said replaying order is designated by said replaying-order designating data.

The thirty-fifth invention is a recording/replaying system, comprising:
a recording medium on which a plurality of data pieces are recorded;
list recording means of recording, on said recording medium, a list for specifying one or multiple data pieces among said plurality of recorded data pieces;
list outputting means of outputting said recorded list;
data selecting means of selecting a predetermined data piece from among said one or multiple data pieces specified by said outputted list; and
data replaying means of replaying said predetermined selected data piece.

The thirty-sixth invention is the recording/replaying system according to the thirty-fifth invention, further comprising replaying-order designating means of designating a replaying order in which said predetermined selected data piece is replayed.

The thirty-seventh invention is the recording/replaying system according to the thirty-sixth invention, wherein said list recording means records a list for specifying a plurality of data pieces,
said data selecting means selects a plurality of data pieces,
said replaying-order designating means designates a replaying order of replaying said plurality of selected data pieces, and
said data replaying means replays a plurality of data pieces for which said replaying order is designated, based on said designated replaying order.

The thirty-eighth invention is the recording/replaying system according to the thirty-fifth invention, further comprising list content data recording means of recording, on said recording medium, list content data regarding the content of said list,
wherein said list contains list content data recording position data regarding a position at which said list content data are recorded.

The thirty-ninth invention is the recording/replaying system according to the thirty-eighth invention, wherein said list content data are audio data for providing an audio output regarding the content of said list, and
said list outputting means reads out said list content data based on said list content data recording position data, and outputs said recorded list by means of an audio output regarding the content of said list.

The fortieth invention is the recording/replaying system according to the thirty-ninth invention, wherein all or some of one or multiple data pieces specified by said list are audio data, and
said list content data are audio data which are generated using all or some of one or multiple data pieces specified by said list.

The forty-first invention is a recording/replaying method, comprising:
a list recording step of recording, on a recording medium on which a plurality of data pieces are recorded, a list for specifying one or multiple data pieces among said plurality of recorded data pieces;
a list outputting step of outputting said recorded list;
a data selecting step of selecting a predetermined data piece from among one or multiple data pieces specified by said outputted list; and
a data replaying step of replaying said predetermined selected data piece.

The forty-second invention is a program which makes a computer execute the list recording step of recording, on a recording medium on which a plurality of data pieces are recorded, a list for specifying one or multiple data pieces among said plurality of recorded data pieces; the list outputting step of outputting said recorded list; the data selecting step of selecting a predetermined data piece from among one or multiple data pieces specified by said outputted list; and the data replaying step of replaying said predetermined selected data piece, the steps being included in the recording/replaying method according to the forty-first invention.

The forty-third invention is a recording medium which holds the program according to the forty-second invention and which can be processed by a computer.

The forty-fourth invention is a recording apparatus comprising list recording means of recording, on a recording medium on which a plurality of data pieces are recorded, a list for specifying one or multiple data pieces among said plurality of recorded data pieces.

The forty-fifth invention is the recording apparatus according to the forty-fourth invention, wherein said recorded list is outputted,
a predetermined data piece is selected from among one or multiple data pieces which are specified by said outputted list, and
said predetermined selected data piece is replayed.

The forty-sixth invention is a recording method comprising a list recording step of recording, on a recording medium on which a plurality of data pieces are recorded, a list for specifying one or multiple data pieces among said plurality of recorded data pieces.

The forty-seventh invention is a program which makes a computer execute the list recording step of recording, on a recording medium on which a plurality of data pieces are recorded, a list for specifying one or multiple data pieces among said plurality of recorded data pieces, the step being included in the recording method according to the forty-sixth invention.

The forty-eighth invention is a recording medium which holds the program according to the forty-seventh invention and which can be processed by a computer.

The forty-ninth invention is a replaying apparatus, comprising:
list outputting means of outputting a list which is recorded on a recording medium on which a plurality of data pieces are recorded, for specifying one or multiple data pieces among said plurality of recorded data pieces;
data selecting means of selecting a predetermined data piece from among one or multiple data pieces which are specified by said outputted list; and
data replaying means of replaying said predetermined selected data piece.

The fiftieth invention is a replaying method, comprising:
a list outputting step of outputting a list which is recorded on a recording medium on which a plurality of data pieces are recorded, for specifying one or multiple data pieces among said plurality of recorded data pieces;
a data selecting step of selecting a predetermined data piece from among one or multiple data pieces which are specified by said outputted list; and
a data replaying step of replaying said predetermined selected data piece.

The fifty-first invention is a program which makes a computer execute the list outputting step of outputting a list which is recorded on a recording medium on which a plurality of data pieces are recorded, for specifying one or multiple data pieces among said plurality of recorded data pieces; the data selecting step of selecting a predetermined data piece from among one or multiple data pieces which are specified by said outputted list; and the data replaying step of replaying said predetermined selected data piece, the steps being included in the replaying method according to the fiftieth invention.

The fifty-second invention is a recording medium which holds the program according to the fifty-first invention and which can be processed by a computer.

The fifty-third invention is a recording medium on which a plurality of data pieces, and a list for specifying one or multiple data pieces among said plurality of data pieces, are recorded.

The fifty-fourth invention is the recording medium according to the fifty-third invention, wherein said recorded list is outputted,
a predetermined data piece is selected from among one or multiple data pieces which are specified by said outputted list, and
said predetermined selected data piece is replayed.

### BRIEF DESCRIPTION OF THE DRAWINGS

Fig. 1 is a structure view of a recording/replaying system according to a first preferred embodiment of the present invention;
Fig. 2 is a structure view of write file managing means 11 according to the first preferred embodiment of the present invention;
Fig. 3 is a structure view of write file managing means according to other preferred embodiment of the present invention;
Fig. 4 is a structure view of control means 21 according to the first preferred embodiment of the present invention;
Fig. 5 is an explanatory view of a descriptor file 16 according to the first preferred embodiment of the present invention;
Fig. 6(a) is an explanatory view of a guide audio data file according to a second preferred embodiment of the present invention;
Fig. 6(b) is an explanatory view of a time table 51 for the guide audio file according to the second preferred embodiment of the present invention;
Fig. 6(c) is a structure view of a replaying apparatus according to the second preferred embodiment of the present invention;
Fig. 7 (a) is an explanatory view of a physical format in a floppy disk FD according to a preferred embodiment of the present invention;
Fig. 7(b) is an explanatory view of a floppy disk case FDC which houses the floppy disk FD according to the preferred embodiment of the present invention; and
Fig. 7 (c) is an explanatory view of a recording/replaying system according to the preferred embodiment of the present invention.

### (EXPLANATION OF REFERENCE SYMBOLS)

- 10: recording apparatus
- 11: write file managing means
- 12: internal storage means
- 13: data file group
- 14: file recording means
- 15: recording medium
- 16: descriptor file
- 17: link file group
- 20: replaying apparatus
- 21: control means
- 22: replay instructing means
- 23: file replaying means
- 24: data file outputting means
- 31: write file selecting means
- 32: file information extracting means
- 33: descriptor file creating means
- 34: additional information inputting/selecting means
- 35: descriptor file creating means
- 41: descriptor file analyzing means
- 42: contents list of recording medium
- 43: output file selecting means
- 51: time table for guide audio file
- 52: time table analyzing/output file selecting means
- 53: instruction timing detecting means
- 54: data file/guide audio file outputting means

### DETAILED DESCRIPTION OF EMBODIMENTS

With reference to the associated drawings, preferred embodiments of the present invention will now be described.

### (FIRST PREFERRED EMBODIMENT)

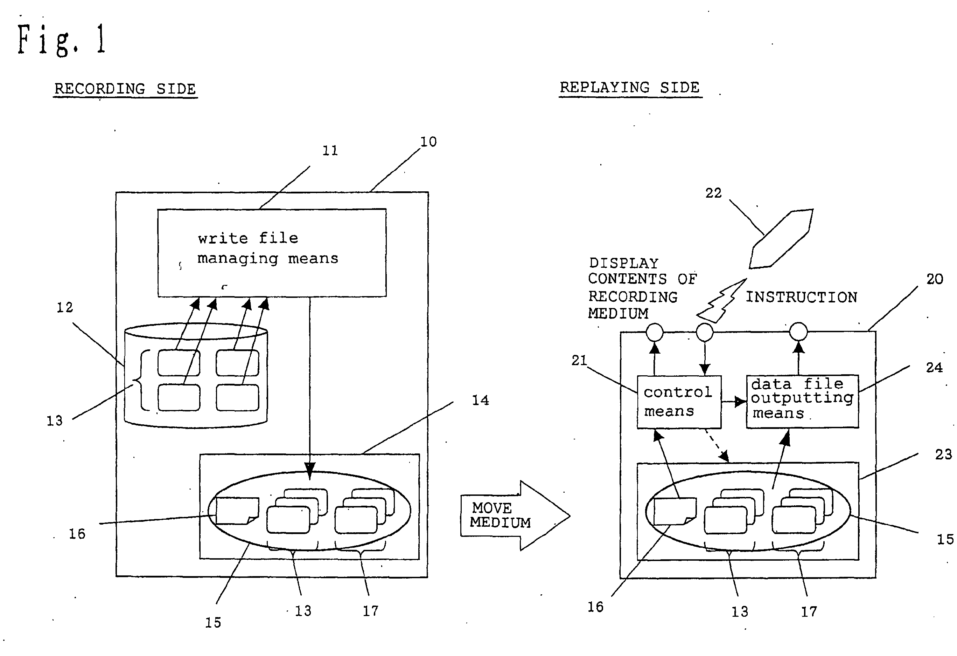

First, while referring to Fig. 1 which is a structure view of a recording/replaying system according to a first preferred embodiment of the present invention, the structure of a recording/replaying system according to this preferred embodiment will be described.

Denoted at 10 is a recording apparatus, denoted at 11 is write file managing means, denoted at 12 is internal storage means, denoted at 13 is a data file group, denoted at 14 is file recording means, denoted at 15 is a recording medium, denoted at 16 is a descriptor file, denoted at 17 is a link file group, denoted at 20 is a replaying apparatus, denoted at 21 is control means, denoted at 22 is replay instructing means, denoted at 23 is file replaying means, and denoted at 24 is data file outputting means.

On the recording medium 15, the recording apparatus 10 formed by the write file managing means 11, the internal storage means 12 and the file recording means 14 records a data file.

The replaying apparatus 20, which is formed by the control means 21, the replay instructing means 22, the file replaying means 23 and the data file outputting means 24, replays the recording medium 15 on which a data file has been thus recorded.

Information registered in the descriptor file 16 has such a content as that shown in detail in Table 1 for instance.

**(TABLE 1)**

| | | | |
|---|---|---|---|
| INFORMATION SOURCE | ACQUIRING/ CREATING METHOD | INFORMATION HANDLED IN DESCRIPTOR FILE (DATA OF LINK FILE ARE NOT CONTAINED IN DESCRIPTOR FILE) | SPECIFIC EXAMPLE |
| FILE SYSTEM INFORMATION (EXISTING) | ACQUIRE FROM FILE SYSTEM | ATTRIBUTE (UNIQUE TO FILE AND UNCHAGEABLE) | FILE SIZE, EXTENSION ... |
| FILE CONTAINED INFORMATION (EXISTING) | EXTRACT FROM FILE | ATTRIBUTE (UNIQUE TO FILE AND UNCHAGEABLE) | PERFORMANCE TIME, SAMPLING FREQUENCY, CHANNEL COUNT ... |
| | | RELEVANT INFORMATION | COMPOSER NAME, PLAYER NAME, RELEVANT URL ... |
| | | LINK FILE, AND CREATED LINK INFORMATION | LYRICS, PICTURES OF PLAYER, JACKET, ETC., ... |
| NEW ADDITIONAL INFORMATION | INPUT/ CREATE | CREATED RELEVANT INFORMATION | TITLE (ALSO FOR COMPACT DISPLAY) , COMMENT ... |
| | LINK FILE CREATE/SELECT | LINK FILE, AND CREATED LINK INFORMATION | THUMBNAIL, INTRODUCTION DATA AND PHOTOS TAKEN BY USER ALSO ALLOWED |

Information related to a file may be information registered in a file system such as FAT32 (e.g. , extension, file name, file size, the date of file creation, the date of updating), to begin with.

Such information proper to each file is unchangeable and should not be changed. Although it is not impossible to change the extension, since the file type is distinguished referring to the extension, a change of the extension would make it impossible to recognize a data processing method and hence to replay data.

Information contained in the file and relevant to data of the file includes the following:
(a) With respect to moving picture data, written as header information in the AVI file format, the wmv file format and the asf file format are image sizes, a frame rate, a data rate, encode information, a replaying time and the like which define video data contained in the file;
(b) With respect to audio data, written as header information in the AVI file format, the wma file format and the asf file format are a sampling frequency, a channel count, compression method information, a performance time, a data rate and the like which define audio data contained in the file. Written as header information in the MP3 file format are text information in ID3 TAG regarding a composer, a player and the like, lyrics information, an album jacket photo, etc; and
(c) With respect to still picture data, information regarding a photographing condition such as EXIF in the JPEG file method, information about a camera used for photographing and the like are written.

Of these information, if information proper to the file (so-called essential attributes) which defines the data is changed, it would become impossible to correctly replay the data.

On the contrary, text information and the like are originally optional, and there would be no problem even if one fails to store such information. But for storage of correct data, although one could see a wrong search result when using the data to run a search since this information is not correct, there would be no other adverse influence.

In reality, text such as the title and the lyrics does not stay the same between different languages (e.g., between Japanese and English). Further, as for relevant URL information, even when the information is correct at the time of registration, it is possible that the web page denoted at the URL will be relocated or discontinued. Not only video and audio data but also ordinary document files contain similar information such as comments and thumbnails.

More detailed structures of the respective means used in this embodiment will be described later.

Operations of the recording/replaying system according to this preferred embodiment will now be described. While describing the operations of the recording/replaying system according to this preferred embodiment, a preferred embodiment of a recording/replaying method according to of the present invention will also be described. (This similarly applies to later preferred embodiments.)

Operations of the recording apparatus 10; From the internal storage means 12, the write file managing means 11 selects data files which are included in the data file group 13 and which are to be recorded on the recording medium 15.

From data files in the data file group 13, the write file managing means 11 creates link files included in the link file group 17 which are associated with the respective data files, and the descriptor file 16 in which relevant information and the like are put together.

The file recording means 14 then records the data file group 13, the link file group 17 and the descriptor file 16 on the recording medium 15.

Operations of the replaying apparatus 20; The control means 21 displays the content of the recording medium, based on the descriptor file 16 replayed by the file replaying means 23.

The control means 21 selects data files included in the data file group 13 which are to be outputted in accordance with an instruction from the replay instructing means 22, and causes the data file outputting means 24 to convert the contents of thus selected data files of the data file group 13 from the file format into the output format and outputs the same.

The information described above is existing information which is already existing when the data file is present within the internal storage means 12. Of course, the write file managing means 11 may create the descriptor file 16 by newly collecting information relevant to the data files of the data file group 13, information relevant to the link files of the link file group 17 and the like.

Further, although the foregoing has described that the replaying apparatus replays in response to an instruction from a remote controller which is the replay instructing means 22, it is apparent that an equivalent function is realized by means of an instruction fed via a panel which is attached to the main unit. Alternatively, the replaying apparatus may be equipped with a function to automatically replay in an order which is designated by the descriptor file when no instruction is given.

In addition, the contents of the recording medium to be displayed by the replaying apparatus can be freely determined. Of course, the data file outputting means 24 may serve also as means of displaying the content of the recording medium.

Necessary relevant information is recorded thus at one location, and therefore, it is possible to quickly display the contents of the recording medium by accessing this one location on the recording medium and reading en bloc. Further, since it is possible to display various relevant information at the same time, it is easy to grasp the content of each data file and find a data file which is to be replayed. Moreover, since the relevant information is at one location and there is no need to check the data files one by one, it is easy to realize not only the processing of displaying the content and thereafter replaying but also such functions as conditional search.

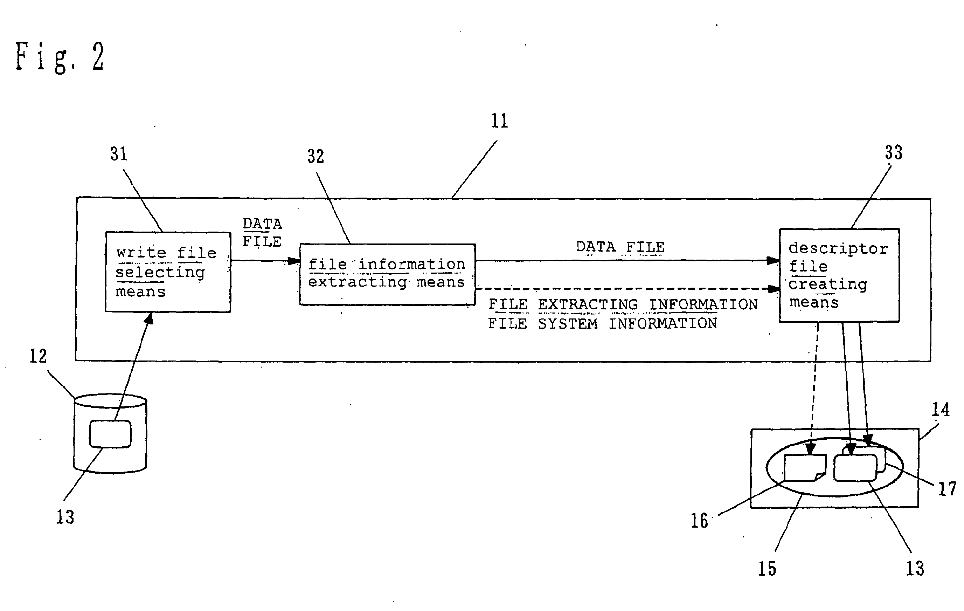

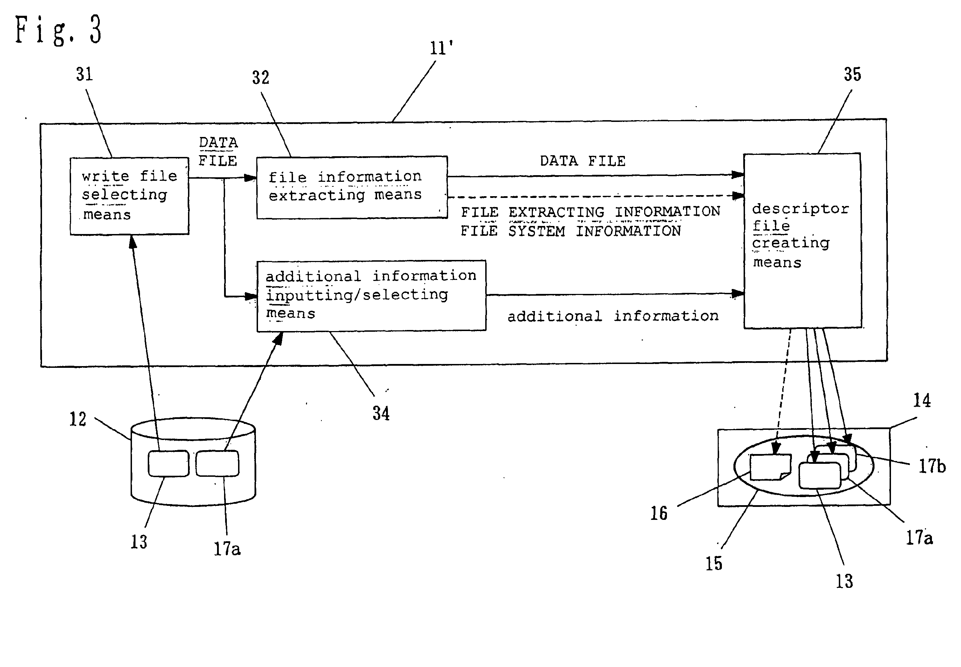

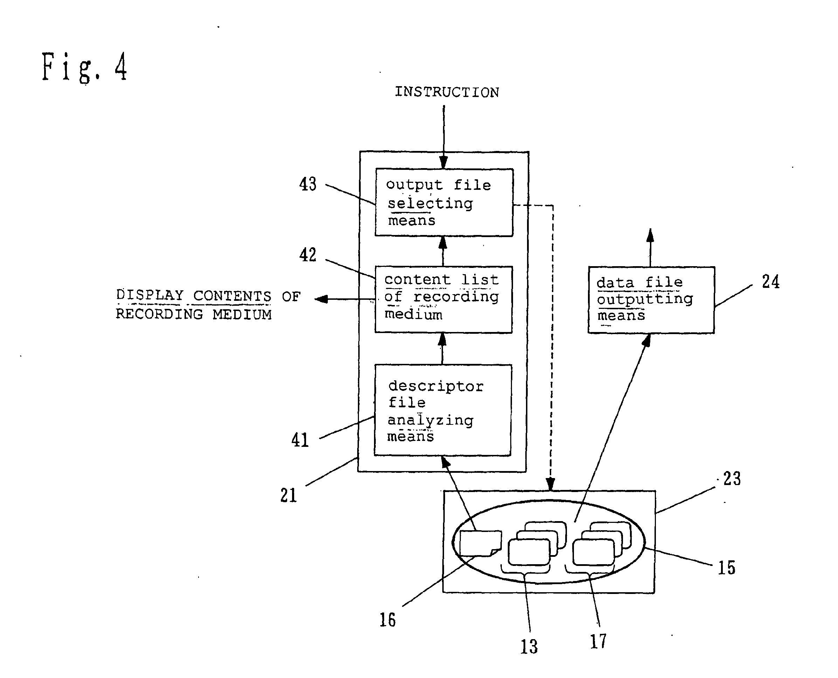

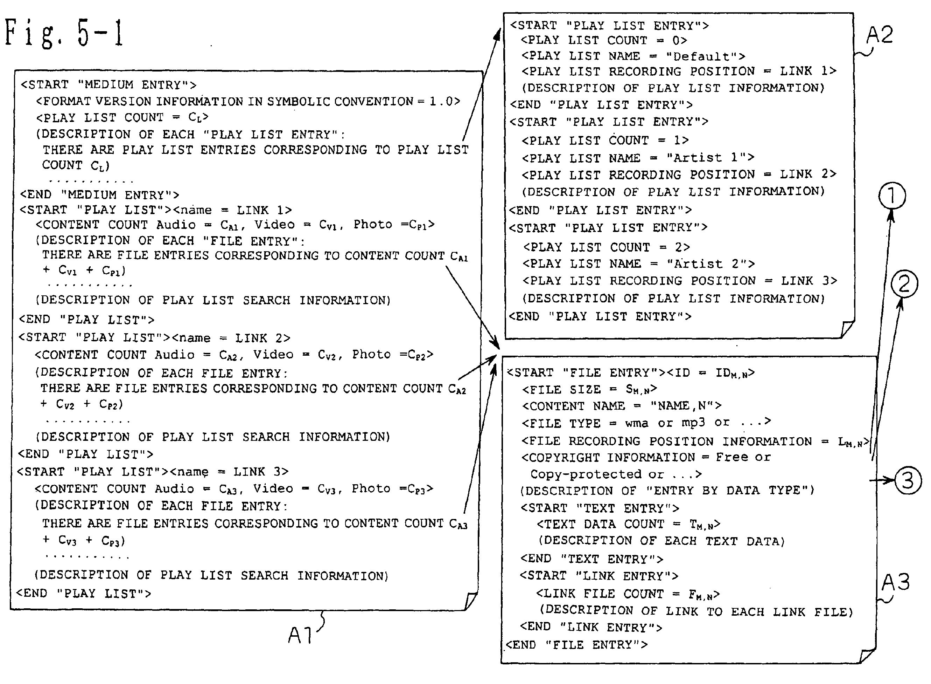

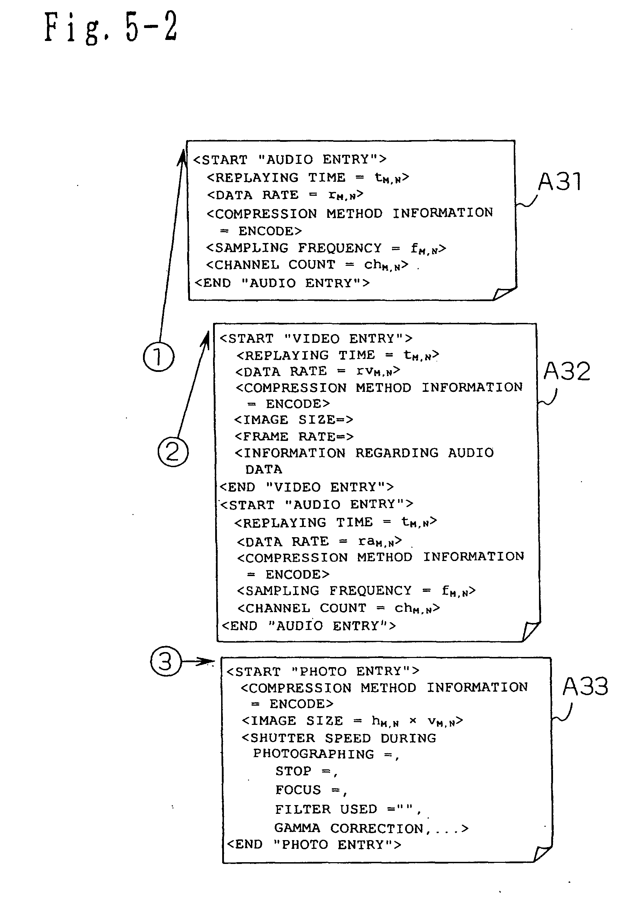

The more detailed structures of the respective means used in this embodiment will now be described.
[1] The more detailed structure and operations of the write file managing means 11 will be described with reference to Fig. 2 which is a structure view of the write file managing means 11 according to the first preferred embodiment of the present invention.
   Denoted at 31 is write file selecting means, denoted at 32 is file information extracting means, and denoted at 33 is descriptor file creating means.
   First, the write file selecting means 31 selects data files which are included in the data file group 13 and which are to be recorded on the recording medium 15. (A user may select one by one, or the data files may be automatically selected in accordance with some criterion.)
   The file information extracting means 32 accesses the file system or analyzes the contents of the respective files in a predetermined procedure, to thereby extract information relevant to each selected data file of the data file group 13.
   The descriptor file creating means 33 creates the descriptor file 16 from thus obtained information.
   From thus obtained information, the descriptor file creating means 33 further creates link files of the link file group 17 as other files which are different from the data files of the data file group 13. (In the event that music data are stored in the data files, information such as album jacket photos is stored in the link files.)
   The write file managing means may have the structure of write file managing means 11' which is shown in Fig. 3 which is a structure view of write file managing means according to other preferred embodiment of the present invention.
   In this drawing, denoted at 34 is additional information inputting/selecting means while denoted at 35 is descriptor file creating means.
   The structures and operations of the write file selecting means 31 and the file information extracting means 32 are similar to those according to this preferred embodiment.
   The additional information inputting/selecting means 34 sets relevant information to be added to the data files of the data file group 13 which have been selected to thereby record on the recording medium 15, and link files 17a and 17b. Of course, the additional information inputting/selecting means 34 may operate in accordance with manual settings given by a user on relevant information regarding each file and the link files 17a and 17b, or alternatively, in accordance with automatic settings which use some criterion.
   The descriptor file creating means 35 creates the descriptor file 16, utilizing information obtained from both the file information extracting means 32 and the additional information inputting/selecting means 34. The descriptor file creating means 35 creates link files 17a and 17b which contain such information as photos, lyrics and introduction data and which are different from the data files of the data file group 13.
   This makes it possible to easily handle even video data files as relevant information and grasp the contents of the data files of the data file group 13.
[2] The more detailed structure and operations of the control means 21 will be described with reference to Fig. 4 which is a structure view of the control means 21 according to the first preferred embodiment of the present invention.
   Denoted at 41 is descriptor file analyzing means, denoted at 42 is a contents list of recording medium, and denoted at 43 is output file selecting means.
   The descriptor file analyzing means 41 analyzes the content of the descriptor file 16 read out from the recording medium 15, and writes necessary information in the contents list of recording medium 42 in accordance with the functions of the replaying apparatus 20. Based on this content, the descriptor file analyzing means 41 then displays the contents of the recording medium 15.
   To be more specific, a list of the recorded data files, the relevant information and the like are displayed.
   The output file selecting means 43 reads from the contents list of recording medium 42 necessary information required for replaying, such as the recording positions of the data files of the data file group 13 which are to be outputted, and sends the same to the file replaying means 23.
[3] The more detailed structure and operations of the descriptor file 16 will be described with reference to Fig. 5 which is an explanatory view of the descriptor file 16 according to this preferred embodiment of the present invention.

The descriptor file 16 is written in a format which is similar to HTML (Hyper Text Mark-up Language).

The descriptor file 16 has such a structure like a structure A1. The item reading, "Description of each 'Play list entry' " in the structure A1 has such a structure like a structure A2. Meanwhile, the item (three items in total) reading, "Description of each 'File entry'" in the structure A1 has such a structure like repetition of a structure A3. The item reading, "Description of 'Entry by data type'" in the structure A3 has such a structure like any one of structures A31 through A33.

First, information related to the recording medium 15 as a whole is written as a medium entry.

Such information includes format version information in the symbolic convention, a play list count, etc.

Since the format of such a descriptor file 16 is upgraded as the amount of information to be described increases, information which permits to determine whether the replaying apparatus is compatible with this format is needed. Noting this , format version information in the symbolic convention is prepared.

Further, a play list which designates a replaying order. (When such a play list is not available, used as the order of replaying the data files of the data file group 13 is (a) the physical recording order, (b) at random, or (c) the order of the file names.)

According to this preferred embodiment, the play list (or play lists) is written in the descriptor file 16.

In the event that many tunes are recorded on the recording medium 15, it is not considered practical to replay all the data files always in the same order. A plurality of play lists are prepared and one which is desired to be replayed at that time is selected, whereby the data files of the data file group 13 to be replayed are easily selected. This in turn makes it possible to replay in a replaying order which reflects the intention of a person who made the play lists.

In the play list, file entries created each for each data file of the data file group 13 are written in accordance with the replaying order of the data files of the data file group 13.

Play lists are classified into two types, one default and the other optional.

In a default play list, the file entries of all data files of the data file group 13 on the recording medium 15 are registered always only one time. It is possible to replay all data files of the data file group 13 only if there is a default play list (even but for an optional play list).

In an optional play list, it is not necessary to register all files. Of course, when one wishes to replay the same data file of the data file group 13 over multiple times, one may record the same file entry in the optional play list multiple times instead of recording the data file of the data file group 13 itself multiple times. In this manner, the limited capacity of the recording medium 15 is used efficiently.

In the medium entry, the play list count is described. After the medium entry is read and analyzed, play list entries created each for each play list are read out and analyzed, thereby making it possible to generally grasp the contents of the data files of the data file group 13 recorded on the recording medium 15.

The play list entries may be given such play list names which make it possible to easily see which kind of data files the corresponding play lists are formed of. This makes it easy for a user to grasp the contents of the recording medium 15.

The play list information recording positions of the play lists may also be described in the play list entries. This makes it possible to read out and analyze detailed information regarding the contents of the play lists immediately after the play lists are selected.

In each play list, by data types, (1) a data file count, (2) a contents list in which the file entries are arranged in the replaying order, and the like are described as play list information.

For instance, when one wishes to replay the recording medium 15 with a replaying apparatus which is capable of replaying only audio data, one only needs to confirm the contents of the file entries merely in relation to music data. Since the data file count is described for each data type, one can instantly determine whether there are data files which can be replayed or not.

As common information regardless of the types of the data files, file sizes, data file names (Data files registered multiple times may be registered under different names.), file types, file recording position information, copyright information and the like are registered in the file entries.

The file recording position information is described, using physical position addresses (in the case of a CD-R, LSN (Logical Sector Number or the like) on the recording medium on which first one byte of the corresponding file is recorded. Hereby, this position is accessed directly and the file is read out without analyzing other information. This allows to read out the data files fast (e.g. , to shorten a waiting time until the start of replaying).

Of course, even when the physical addresses are undetermined at the time of creation of the descriptor file 16, the files can be recorded all at once. Hence, it is possible to calculate a relative position from a particular position. Use of this information permits to read out the data files fast.

Information relevant to the contents of data files is different depending upon the type of the data files. In the event that audio data are stored in data files, a replaying time, a data rate, compression method information, a sampling frequency, a channel count and the like are registered. In the event that video data are stored in data files, a replaying time, a data rate, compression method information, image sizes, a frame rate, information regarding audio data (which are to be replayed simultaneously with the video data) and the like are registered. In the event that still picture data are stored in data files, compression method information, image sizes, information regarding a photographing condition (a shutter speed, a stop, focus, a filter used, gamma control, etc.) and the like are registered.

Information relevant to the contents of data files is information which is written also within the data files of each type. However, a replaying apparatus reads or analyzes a data file while displaying a list of data files recorded on a medium, it takes a very long time. With the information relevant to the contents of the data files kept at one location, it is possible to display a list using this information at a high speed. This also makes it possible to determine whether a replaying apparatus can replay the data files and run a search using this information at a very high speed.

Of course, the information relevant to the contents of the data files may be (1) text information related to performance itself such as composers and players (e.g., the names, the URLs of relevant web pages on the Internet, the places, the date and time) in the event that music data, video data and the like are stored in the data files, or (2) information such as the model name of a camera used for photographing, the place of photographing and the date and time of photographing, and comments put by a person who created the medium (written as text information in text entries) in the event that still picture data are stored in the data files.

Text information may be written in such a format which combines the substance of text data, codes expressing the contents of text, language designation and a text data length. Meanwhile, link information relevant to the link files 17a and 17b (See Fig. 3.) may be written in such a format which combines codes expressing the contents of the link files, a file type, a text data length and link designation.

In a replaying apparatus which is capable of displaying such property, this makes it easier to grasp the contents of the data files. This also makes it possible to enhance the accuracy of high-speed search.

A text information count representing text information to be written is registered for each data file in a text entry. Each piece of text information is written in such a format which combines codes expressing the content of the text, a text information length and the substance of text information.

When the data files are relevant to data representing still pictures such as album jackets, photos of a composer, a player and a photographer and the like, link entries may be provided in which link file information regarding thumbnail images or the like is written. In a replaying apparatus which is capable of displaying such data, this makes it easier to grasp what kind of contents the data files have.

To be more specific, link file counts set for the respective data files are registered in the link entries for example. At this stage, a format combining codes expressing the contents of the link files, file sizes, file types, file recording position information and copyright information (if necessary) may be used.

As medium information regarding the medium as a whole, the name given to the medium (A shortened name is given in some cases.), data added to the medium (such as pictures on the surfaces of the medium, a picture on a medium case, a leaflet which can be carried together with the medium), the name of a person who created the medium, the year/month/day on which the medium was created, and the like may be written. When it is a shortened name that is given, even a replaying apparatus whose display screen size is small so that a long name cannot be displayed or a replaying machine which scrolls up and down for the purpose of displaying can provide at-a-glance display.

The various data described above may be included within the descriptor file 16 (For example, all data may be written within the medium entry, or alternatively, the substance of data may be recorded in a different portion from the medium entry within the descriptor file 16 and link information for link to this different portion alone may be written within the medium entry.). Further alternatively, the substance of data of the various data described above may be recorded as other file on the recording medium 15, and link information for link to this other file alone may be written within the descriptor file 16.

In the event that a shortened name as one described above is given also to a play list name, even when the display screen size of a replaying machine is small, the replaying machine can provide at-a-glance display.

A data file count by data type may be written as the play list information, or written in the play list entries.

The file format of the descriptor file 16 may be a format which is similar to HTML, or a format in which assigned information is written at a predetermined position having a predetermined length which has been set in advance.

There may be only one descriptor file 16 or multiple descriptor files 16. When the descriptor file 16 is divided into a plurality of files, only necessary files can be used in accordance with the functions of a replaying apparatus, and therefore, it is not necessary to perform unwanted data analysis.

The structures of text entries, link entries and the like may be any desired structures.

### (SECOND PREFERRED EMBODIMENT)

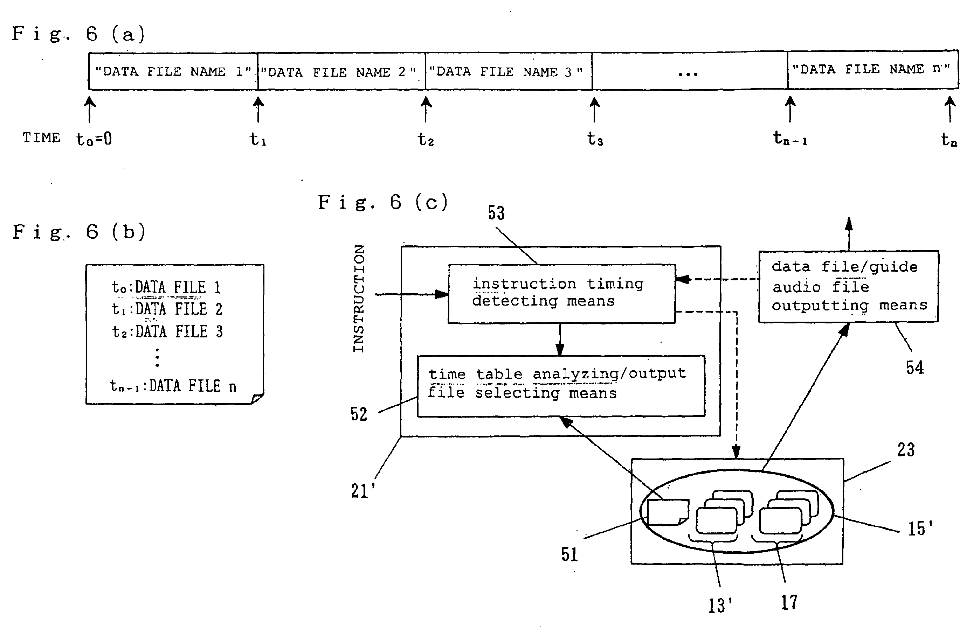

The structure of a recording/replaying system according to a second preferred embodiment will now be described with reference to Fig. 6 (a) which is an explanatory view of a guide audio file according to the second preferred embodiment of the present invention, Fig. 6 (b) which is an explanatory view of a time table 51 for the guide audio data file according to the second preferred embodiment of the present invention and Fig. 6(c) which is a structure view of a replaying apparatus according to the second preferred embodiment of the present invention.

The structure and operations of the recording/replaying system according to this preferred embodiment are similar to the structure and operations of the recording/replaying system according to the first preferred embodiment described above. Differences between the two therefore will be mainly described in the following.

A guide audio data file according to this preferred embodiment is a file which is obtained by turning information to be displayed into a format which can be outputted as audio as shown in Fig. 6(a), and is one of data files contained in a data file group 13'. A guide audio data file is linked to each play list, the medium information described earlier, etc.

To be more specific, one guide audio data file for reading out the data file names (See Fig. 6 (a) . ) one after another is linked to each play list (or play list entries in the play list) , the medium information, etc.

In the time table 51 for the guide audio file, as shown in Fig. 6(b), information is written which denotes which data file's (or play list's) name or information is assigned from tₖ second to tₙ₋₁ second (k = 0, ..., n). Of course, such information may be written within the guide audio data file (e.g., a header portion).

In the replaying apparatus according to this preferred embodiment (See Fig. 6(c).), data file/guide audio file outputting means 54 replays the guide audio file.

When receiving an instruction to choose a data file which a user wishes to replay while the guide audio file is being replayed, instruction timing detecting means 53 provides time table analyzing/output file selecting means 52 with the timing at which the guide audio file is replayed.

Referring to the time table 51 for the guide audio file on a recording medium 15' , the time table analyzing/output file selecting means 52 properly selects the data file mentioned above which the user wishes to replay in accordance with the timing of replaying of the guide audio file.

The data file/guide audio file outputting means 54 replays the data file thus selected by the time table analyzing/output file selecting means 52.

The replaying apparatus according to this preferred embodiment is suitable to where a displaying function is not available (or where the displaying function is poor). To be more specific, a replaying apparatus which is not equipped with a displaying function and replays mainly audio data files is an assumption behind. As a guide audio data file is created in the same format as that of audio data files which can be replayed, it is possible to notify a user of the contents of the recording medium 15' without adding almost no hardware such as a display.

Of course, data saved in a guide audio data file may be data expressing the characteristic melodies of the data files (in the event that music data are stored in the data files) , or alternatively, data to which other information than the data file names and the play list names is added.

The foregoing has described the first and the second preferred embodiments of the present invention in detail.

In the recording/replaying systems according to the preferred embodiments described above, the recording apparatuses perform recording and the replaying apparatuses which are structured as separate devices from the recording apparatuses perform replaying.

However, the recording/replaying systems according to the present invention may be such a system wherein a recording apparatus and a replaying apparatus are integrated with each other.

Of course, a replaying apparatus may be a large one like a color TV monitor which is easy to look at, a small one like a portable replaying machine which can display only in monochrome, or one which does not have a monitor and cannot therefore display video.

Even when a replaying apparatus has merely a small monitor, by means of displaying of data file names, selection of data files may become considerably easy. For instance, when data file names are read out one after another, a waiting time until one hears a desired data file name read out and selects the corresponding data file may sometimes be long to a certain extent. Displaying of data file names eliminates such a waiting time.

In addition, the recording/replaying systems according to the preferred embodiments described above comprise recording apparatuses in which the write file managing means, the file recording means and the internal storage means storing data files are integrated with each other.

However, the recording/replaying systems according to the present invention may be a personal computer which comprises a CD drive serving as the file recording means and a hard disk serving as the internal storage means. In this instance, the write file managing means can be realized using a program.

Of course, recording may be executed utilizing a program such as that of a computer or a microcomputer, a recording result may be recorded on a recording medium such as a floppy disk which one may carry with himself or herself, and replaying may be realized using other independent system.

An instance where a recording result is recorded on a recording medium such as a floppy disk will now be described more specifically.

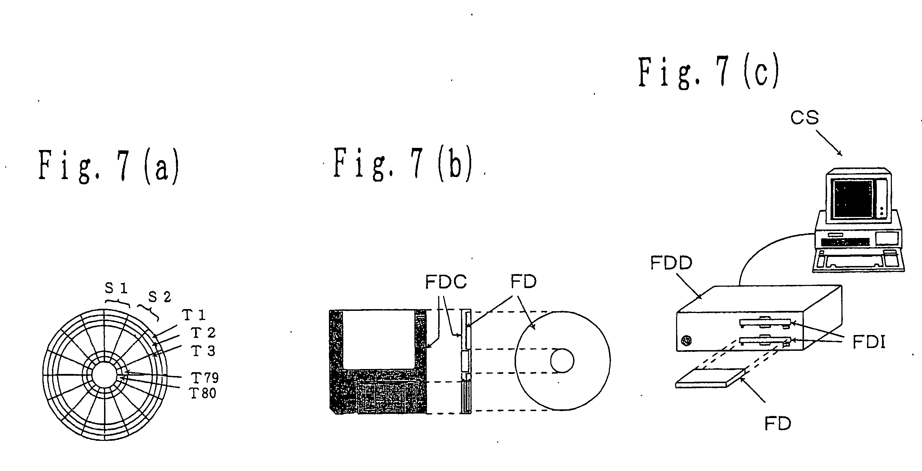

A floppy disk FD which is the main section of a recording medium has a physical format which is shown in Fig. 7 (a) which is an explanatory view of a physical format in a floppy disk FD according to a preferred embodiment of the present invention.

To be more specific, there are tracks T1, T2, T3, ..., T79, T80 defined in a concentric arrangement from the outer side toward the inner side, which are divided along angle directions into sixteen sectors S1, S2, ...

A program is recorded utilizing such a physical format.

As shown in Fig. 7(b) which is an explanatory view of a floppy disk case FDC which houses the floppy disk FD according to the preferred embodiment of the present invention, the floppy disk FD is housed in the floppy disk case FDC.

In this manner, it is possible to safely carry the floppy disk FD while protecting the floppy disk FD from dust, impact from outside, etc.

A program is recorded on and replayed from the floppy disk FD, utilizing such as a recording/replaying system as that shown in Fig. 7(c) which is an explanatory view of a recording/replaying system according to the preferred embodiment of the present invention.

To be more specific, with a floppy disk drive FDD connected with a computer system CS, it is possible to record and replay a program which uses the floppy disk FD.

A floppy disk FD is loaded and unloaded through a floppy disk slot FDI.

For recording, the computer system CS records a program on the floppy disk FD, utilizing the floppy disk drive FDD.

For replaying, the floppy disk drive FDD reads the program from the floppy disk FD and transfers the same to the computer system CS.

While the foregoing has described an instance where a floppy disk is used as a recording medium, what has been described similarly applies also to an optical disk, a memory card, a CD-R or the like used as a recording medium.

As necessary relevant information is recorded at one location, the contents of a recording medium can be quickly displayed only by accessing this one location on the recording medium and reading en bloc.

Further, since various relevant information can be displayed at the same time, it is possible to grasp the content of each data file in a simple manner and easily find out a data file which one wishes to replay.

In addition, since the relevant information is recorded at one location and there is no need to check the data files one by one, it is easy to realize such a function as condition search.

A recording medium referred to in the present invention corresponds to the recording medium 15 (the recording medium 15'), the data selecting means according to the present invention corresponds to means which includes the write file managing means 11 (the write file managing means 11') and the file recording means 14, the list recording means according to the present invention corresponds to means which includes the write file managing means 11 and the file recording means 14, the data replaying means according to the present invention corresponds to means which includes the control means 21, the file replaying means 23 and the data file outputting means 24. Data-related information data recording means according to the present invention corresponds to means which includes the write file managing means 11 and the file recording means 14. List data recording means according to the present invention corresponds to means which includes the write file managing means 11 and the file recording means 14.

Data referred to in the present invention correspond to files included in the data file group 13, a list referred to in the present invention corresponds to the descriptor file 16, and data-related information data referred to in the present invention correspond to the descriptor file 16 and files included in the link file group 17, and list data referred to in the present invention correspond to the descriptor file 16.

The replaying-order designating data recording means according to the present invention corresponds to means which includes the write file managing means 11 and the file recording means 14.

Replaying-order designating data according to the present invention correspond to the descriptor file 16 (more precisely, a play list written in the descriptor file 16).

The list outputting means according to the present invention corresponds to means which includes the control means 21, the file replaying means 23 and the data file outputting means 24, the data selecting means according to the present invention corresponds to means which includes the control means 21 and the replay instructing means 22. The replaying-order designating means according to the present invention corresponds to means which includes the control means 21 and the replay instructing means 22. The list content data recording means according to the present invention corresponds to means which includes the write file managing means 11 and the file recording means 14.

List content data referred to in the present invention correspond to a file included in the data file group 13' (more precisely, a guide audio data file).

A program referred to in the present invention is a program which operates in co-operation with a computer and makes the computer execute the operations at all or some steps (or processes, operations, functions, etc.) of the recording/replaying method according to of the present invention described above.

A recording medium referred to in the present invention is a recording medium which holds such a program which makes a computer execute the operations at all or some steps (or processes, operations, functions, etc.) of the recording/replaying method according to the present invention described above, which can be read on a computer and which ensures that said program as it is read operates in co-operation with said computer and said operations are executed.

The "some steps (or processes, operations, functions, etc.)" in the present invention mentioned above refer to one or some steps among these plurality of steps.

The "operations at some steps (or processes, operations, functions, etc.)" in the present invention mentioned above refer to all or some operations at said steps.

In one embodiment of use, a program referred to in the present invention may be recorded on a recording medium which can be read on a computer and which operates in co-operation with the computer.

In other embodiment of use, a program referred to in the present invention may be transmitted via a transmission medium, read on a computer and operates in co-operation with the computer.

The recording medium includes a ROM, etc., whereas the transmission medium includes a transmission medium such as the Internet, light, an electric wave, a sound wave, etc.

A computer referred to above in relation to the present invention is not limited pure hardware such as a CPU but may include firmware, OS, and further, peripheral equipment.

As described above, the structures according to the present invention may be realized by software or hardware.

### POSSIBILITY OF INDUSTRIAL USE

The present invention had an advantage that it is possible to replay data in a manner which better suits a user's intention.

## Claims

1. A recording/replaying system, comprising:
a recording medium on which a plurality of data pieces are recorded;
data selecting means of selecting a predetermined data piece from among said plurality of recorded data pieces;
list recording means of recording on said recording medium one or multiple lists for specifying said predetermined selected data piece; and
data replaying means of replaying a predetermined data piece specified by said list, based on said one or multiple recorded lists.

2. The recording/replaying system of claim 1, further comprising data-related information data recording means of recording, on said recording medium, data-related information data regarding data-related information relevant to a predetermined data piece specified by said one or multiple lists.

3. The recording/replaying system of claim 1, further comprising list data recording means of recording, on said recording medium, list data regarding said one or multiple lists.

4. The recording/replaying system of claim 3, wherein said list data include all or some of (a) list recording position data regarding positions at which said one or multiple lists are recorded, (b) list count data regarding the number of said one or multiple lists, (c) count data by data type regarding the number of predetermined data pieces by type specified by said one or multiple lists, (d) data recording position data regarding positions at which predetermined data pieces specified by said one or multiple lists are recorded, and (e) data-related information data regarding data-related information related to predetermined data pieces specified by said one or multiple lists.

5. The recording/replaying system of claim 3, further comprising data-related information data recording means of recording, on said recording medium, data-related information data regarding data-related information related to predetermined data pieces specified by said one or multiple lists,
wherein said list data include data-related information data recording position data regarding positions at which said data-related information data are recorded.

6. A recording/replaying method, comprising:
a data selecting step of selecting a predetermined data piece from among a plurality of data pieces which are recorded on a recording medium;
a list recording step of recording, on said recording medium, one or multiple lists for specifying said predetermined selected data piece; and
a data replaying step of replaying a predetermined data piece specified by said list, based on said one or multiple recorded lists.

7. A program which makes a computer execute the data selecting step of selecting a predetermined data piece from among a plurality of data pieces which are recorded on a recording medium; the list recording step of recording, on said recording medium, one or multiple lists for specifying said predetermined selected data piece; and the data replaying step of replaying a predetermined data piece specified by said list, based on said one or multiple recorded lists, the steps being included in the recording/replaying method of claim 6.

8. A recording medium which holds the program of claim 7 and which can be processed by a computer.
